# EUROPÄISCHE PATENTSCHRIFT

(11) **EP 0 646 515 B1**
(45) Veröffentlichungstag und Bekanntmachung des Hinweises auf die Patenterteilung: **05.03.1997**
(21) Anmeldenummer: 94112906.6
(22) Anmeldetag: 19.08.1994
(51) Int. Cl.: B62D 21/02

(54) **Rahmen für Nutzfahrzeuge**
Frame for commercial vehicles
Châssis pour véhicules utilitaires

(30) Priorität: 30.09.1993 DE 4333314
(43) Veröffentlichungstag der Anmeldung: 05.04.1995
(73) Patentinhaber: MERCEDES-BENZ AG, 70327 Stuttgart (DE)
(72) Erfinder: Steiner, Kurt, D-73776 Altbach (DE)

(56) Entgegenhaltungen:
- FR-A- 2 686 304
- US-A- 2 603 506

## Beschreibung

Die Erfindung betrifft einen Rahmen für Nutzfahrzeuge nach dem Oberbegriff des Patentanspruches 1.

Bei Nutzfahrzeugen mit einem Triebkopf und einem dahinterliegenden Aufbau ist üblicherweise ein durchgehender Rahmen vorgesehen und es sind die Längsträger des triebkopfseitigen Rahmenteiles einstückig mit den Längsträgem des aufbauseitigen Rahmenteiles ausgebildet.

Ein Triebkopf ist in gleicher Ausführung üblichweise dazu geeignet und bestimmt, mit einer Vielzahl unterschiedlicher Fahrzeugaufbaurahmen, insbesondere solchen mit unterschiedlich langen Längsträgern zu Nutzfahrzeugen der verschiedensten Art kombiniert zu werden.

Es ist schon bekannt (GB-A-15 12 712) triebkopfseitig und aufbauseitig je ein gesondertes Rahmenteil vorzusehen, wobei beide Rahmenteile im Querschnitt U-förmige Längsträger aufweisen und einander entsprechende Längsträger von triebkopfseitigem und aufbauseitigem Rahmenteil Rücken an Rücken verbunden sind. Die Längsträger des aufbauseitigen Rahmenteils haben dabei einen zur Fahrzeuglängsmitte offenen U-förmigen Querschnitt, während die Längsträger des triebkopfseitigen Rahmenteiles nach der Gegenseite offen sind. Bei einer solchen Lösung ergibt sich im Bereich des Triebkopfes eine größere lichte Weite zwischen den Längsträgem. Die Längsträger von triebkopfseitigem und aufbauseitigem Rahmenteil sind aber im wesentlichen nur kraftschlüssig verbunden und die Befestigung von Aggregaten zwischen den Längsträgern des triebkopfseitigen Rahmenteiles kann letztlich nur auf der Oberseite der Längsträger oder an den aufrechten Mittelstegen über dort anzubringende Konsolen erfolgen.

Bekannt ist es für Rahmen von Fahrzeugen, insbesondere Fahrzeugfahrgestellen ferner (DE-C-26 07 154), solchen Rahmen aus einzelnen Rahmenteilen zusammenzusetzen und als Profile für die Längsträger von Rahmenteilen auch Z-förmige Profile zu verwenden. Die Z-förmigen Profile sind bei einer bekannten solchen Lösung für die Längsträger eines mittleren Rahmenteiles eines Fahrgestellrahmens eines Anhängefahrzeuges vorgesehen, in dessen Bereich die Achsen angeordnet sind und an dessen Längsträger die Längsträger der äußeren Rahmenteile anschließen, die durch Winkelprofile gebildet sind. Die Verbindung der jeweiligen Längsträger erfolgt dabei im Bereich der aufrechten Mittelstege durch Verschraubung und bei Abstützung der Schenkel der Winkelprofile an den entsprechenden Stegen der Z-Profile.

Die Erfindung beschäftigt sich mit dem Problem, die Anbindung der einzelnen Aggregate des Triebkopfes an die Rahmenlängsträger wirtschaftlich rationell zu gestalten, und zwar insbesondere durch eine günstige Formgestaltung der dem Triebkopf zugehörigen Längsträger. Dabei soll dieses Ziel unter der Prämisse einer einfachen und kostengünstigen Herstellbarkeit der Rahmenlängsträger stehen. Ferner soll die Anzahl unterschiedlicher Rahmenlängsträger für unterschiedliche Nutzfahrzeuge, insbesondere unterschiedlich lange Nutzfahrzeuge soweit wie möglich verringert werden und eine hohe Stabilität des Rahmens gewährleistet sein.

Erreicht wird dies durch die kennzeichnenden Merkmale des Anspruches 1.

Durch die Trennung des Rahmens in einen triebkopfseitigen und einen aufbauseitigen Rahmenteil wird erreicht, daß aufbau- und triebkopfseitig die Rahmenteile bedarfsgerecht dimensioniert werden können, und durch die Verwendung von Z- und U-förmigen Profilen in der erfindungsgemäßen Weise wird auch sichergestellt, daß unterschiedlich dimensionierte Langsträger fallweise ohne Nachteile bezüglich der Festigkeit ihrer Verbindung zu den Längsträgern der anderen Rahmenteile zum Einsatz gebracht werden können. Das verwendete Z-Profil ermöglicht zu dem eine wirtschaftliche Herstellbarkeit.

Durch die Trennung liegen nämlich für den Triebkopfbereich relativ kurze Längsträgerteile vor, die wegen ihrer Kürze nahezu beliebig und dennoch wirtschaftlich preßverformt werden können. Hiervon wird insbesondere bei den speziellen Ausführungsformen nach den abhängigen Ansprüchen 3 bis 5 Gebrauch gemacht.

Des weiteren birgt die Z-Profilform schon in sich selbst Vorteile für den Ein-und Anbau der Triebkopfaggregate. So ist durch das entgegengesetzte Abstehen der Querschenkel des Z-Profils von dessen lotrechtem Mittelteil eine gute raumsparende Einbaubarkeit von Aggregateteilen zwischen den beiden Längsträgern ebenso gegeben wie eine gute Anbaubarkeit von Teilen außen seitlich an den Längsträgern. In beiden Fällen können die Querstege selbst als Ein- bzw. Anbaukonsolen dienen. Durch Konsolen bildende angestanzte und preßgeformte Auskragungen kann die Montagefreundlichkeit der erfindungsgemäßen Rahmenausbildung noch weiter erhöht werden. Es kann insbesondere ein nachträgliches kostenintensives Anbringen von Montagekonsolen vermieden werden.

Der durch ein seitliches Verbiegen der Triebkopf-Längsträger vergrößerte Längsträgerzwischenraum im vorderen Triebkopfbereich ermöglicht zusammen mit den nach außen verlaufenden Querstegen des Trägerprofils eine große Einführbreite und einen großen Aufnahmeraum für das Triebwerk. Der breitere Einbauraum mit den nach außen verlaufenden Profil-Querstegen laßt auch die zur Durchführung von Leitungen und Kabeln von unterhalb des Rahmens in das Fahrerhaus benötigten Freiräume vergrößern.

Die nach außen verlaufenden Profil-Querstege ermöglichen eine gute Auflage des hierauf direkt auflegbaren Fahrerhauses.

Der vorne aufgeweitete Längsträgerabstand läßt eine Montage der Federböcke innerhalb der Längsträger zu, wodurch ein zusätzlicher Schutz des Federbockes gegen Abreißen bei einem Unterfahren gegeben ist. Auch ein breiter Kühler ist wegen des lokal vorne erzielbaren großen Trägerabstandes einfach einbaubar.

Durch die im Querschnit Z-förmigen Längsträger im Triebkopfbereich lassen sich beliebig lange Aufbaurahmen durch eine einfache Nietverbindung anschließen. Die Fertigung der Fahrzeugtriebköpfe kann unabhängig von den jeweils diesen Triebköpfen später einmal zuzuordnenden Aufbauten erfolgen. Dies stellt eine große Logistikvereinfachung und damit Kostenrationalisierung dar.

Ein Ausführungsbeispiel ist in der Zeichnung dargestellt.

Es zeigen:

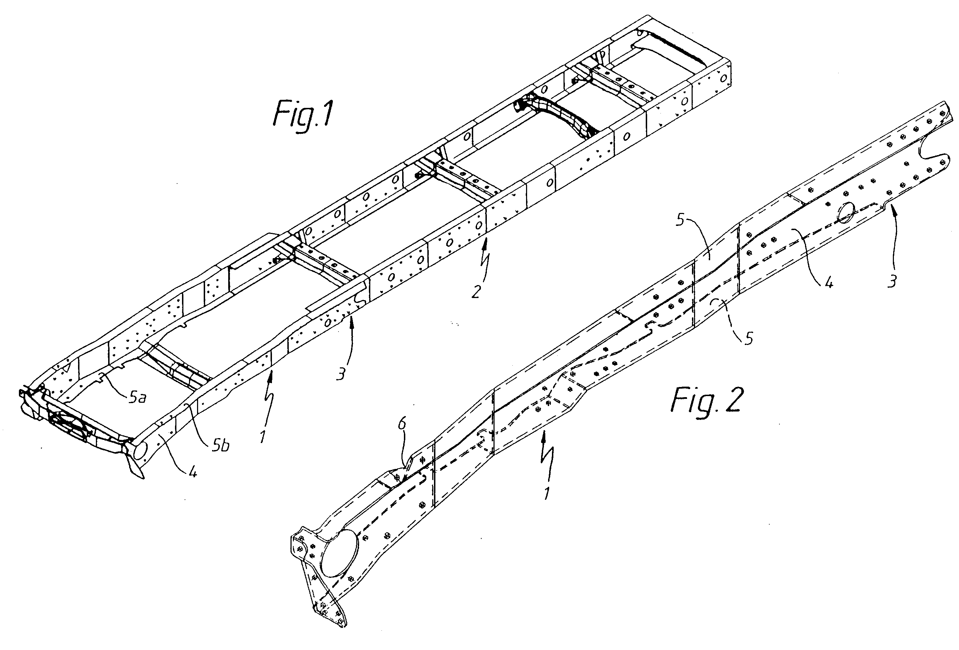

- Fig. 1: eine perspektivische Ansicht eines Nutzfahrzeugrahmens,
- Fig. 2: eine perspektivische Ansicht eines speziell geformten Längsträgers für den triebkopfseitigen Rahmenteil mit verschiedenen Auskragungen.

Ein Fahrgestellrahmen eines Nutzfahrzeuges besteht aus quer miteinander verbundenen triebkopfseitigen Längsträgern 1 und daran anschließenden Längsträgern 2 des aufbauseitigen Rahmenteils.

Die triebkopfseitigen Längsträger besitzen ein Z-Profil und die aufbauseitigen Längsträger 2 ein U-Profil. Beide Träger sind in einem Überlappungsbereich 3 miteinander z.B. vernietet.

Das Z-Profil der Triebkopf-Längsträger 1 besitzt einen in Betriebslage des Rahmens lotrecht ausgerichteten Mittelsteg 4 und lotrecht oben und unten Querstege 5a,5b, von denen der obere nach außen und der untere nach innen zwischen die Längsträger 1 ausgerichtet ist. Bei gegeneinander offenen Querschnitten der U-förmigen Längsträger des aufbauseitigen Rahmenteiles sind die im Querschnitt Z-förmigen Längsträger des triebkopfseitigen Rahmenteiles so angeordnet, daß bei aufrechtem Mittelsteg 4 die unteren Querstege 5a nach innen, d.h. aufeinander zu und die oberen Querstege 5b entgegengesetzt, d.h. nach außen gerichtet sind. Die unteren Querstege 5a bilden eine Anlage für die entsprechenden Querstege der U-förmigen Profile der aufbauseitigen Längsträger 2.

Die Ausrichtung der oben liegenden Querstege 5b nach außen ermöglicht ein raumoptimiertes Einsetzen von Aggregaten zwischen die Längsträger 1.

Die Längsträger 1,2 bestehen jeweils aus preßgeformtem Stahl. An den Querstegen 5 befinden sind vor der Preßverformung angestanzte Auskragungen 6, die beim Preßverformen mehrfach abgewinkelt sein können.

Durch die Z-Profilform der triebkopfseitigen Längsträger 1 können diese wegen ihrer allein durch die Triebkopflänge bestimmten relativen Kürze mit wirtschaftich vertretbaren Preßdrücken nahezu beliebig verformt werden, ohne dabei auf die z.B. anzunietenden aufbauseitigen Längsträger 2 Rücksicht nehmen zu müssen.

So können die triebkopfseitigen Längsträger insbesondere nach an ihren vorderen Enden mit nach innen abgewinkelten Teilen ihrer Mittelstege 4 versehen sein, die als Befestigungskonsolen verwendbar sind.

Die triebkopfseitigen Längsträger 1 sind im übrigen in üblicher Weise mit eingestanzten Ausnehmungen zum Durchführen oder Anbringen beliebiger Teile ausgerüstet.

## Patentansprüche

1. Rahmen für Nutzfahrzeuge mit einem triebkopfseitigen Rahmenteil, einem damit zu verbindenden aufbauseitigen Rahmenteil sowie seitlichen Längsträgern (1, 2) der Rahmenteile, die als Profilträger jeweils einen aufrechten Mittelsteg sowie obere und untere Querstege aufweisen und von denen einer Rahmenlängsseite zugehörige über ihre Mittelstege aneinanderliegend verbunden sind, wobei die Längsträger (2) der aufbauseitigen Rahmenteile bei U-förmigen Querschnitt mit ihren Querstegen aufeinander zugerichtet sind,
**dadurch gekennzeichnet**,
daß die Längsträger (1) der triebkopfseitigen Rahmenteile bei von einander abgewandten oberen Querstegen (5b) und einander zugewandten unteren Querstegen (5a) Z-förmigen Querschnitt aufweisen und daß die unteren Querstege (5a) der treibkopfseitigen Längsträger (1) im Überlappungsbereich (3) zu den rahmenseitigen Längsträgern (2) diese untergreifen.

2. Rahmen nach Anspruch 1,
**dadurch gekennzeichnet**,
daß die freien Enden der triebkopfseitigen Längsträger (1) für ein Annieten der aufbauseitigen Längsträger (2) ausgebildet sind.

3. Rahmen nach Anspruch 1 oder 2,
**dadurch gekennzeichnet**,
daß der gegenseitige Abstand der triebkopfseitigen Längsträger (1) zum vorderen Triebkopfende hin zunimmt.

4. Rahmen nach einem der vorhergehenden Ansprüche,
**dadurch gekennzeichnet**,
daß an die Querstege (5) der triebkopfseitigen Längsträger (1) Auskragungen (6) zur Aufnahme von Anbauteilen angeformt sind.

5. Rahmen nach Anspruch 4,
**dadurch gekennzeichnet**,
daß die Auskragungen (6) gegeneinander gewinkelte Flächenabschnitte besitzen.

6. Rahmen nach einem der vorhergehenden Ansprüche,
**dadurch gekennzeichnet**,
daß die Mittelstege (4) der triebkopfseitigen Längsträger (1) an ihren vorderen Enden um etwa 90° nach innen oder außen gewinkelte Endabschnitte besitzen.

## Claims

1. A frame for commercial vehicles and having a frame part at the power end, a frame part to be connected to it and disposed at the superstructure end and also lateral longitudinal members (1, 2) of the frame parts, which, as profiled members, each have an upright middle web and also top and bottom transverse webs and of which those which belong to one longitudinal frame side are connected via their middle webs adjacent one another, the longitudinal members (2) of the frame parts on the superstructure side, if they are of U-shaped cross-section, being so aligned that their transverse webs are towards one another, characterised in that the longitudinal members (1) on the power-end frame parts have a Z-shaped cross-section when their top transverse webs (5b) are remote from one another while their bottom transverse webs (5a) are towards one another, and in that, in the overlapping zone (3) in respect of the longitudinal members (2) on the frame side, the bottom transverse webs (5a) of the power-end longitudinal members (1) engage under the said longitudinal members (2).

2. A frame according to Claim 1, characterised in that the free ends of the power-end longitudinal members (1) are constructed for rivetting onto the longitudinal members (2) on the superstructure side.

3. A frame according to Claim 1 or 2, characterised in that the mutual spacing between the power-end longitudinal membes (1) increases towards the front end at which the power unit is disposed.

4. A frame according to one of the preceding Claims, characterised in that projections (6) are integrally formed on the transverse webs (5) of the power-end longitudinal membes (1) to receive attached parts.

5. A frame according to Claim 4, characterised in that the projectrions (6) have surface portions which are angled over towards one another.

6. A frame according to one of the preceding Claims, characterised in that the middle webs (4) of the power-end longitudinal members (1) have, at their front ends, end portions which are angled over inwardly or outwardly by about 90°.

## Revendications

1. Châssis pour véhicules utilitaires, comportant une partie de châssis située du côté de l'avant moteur, une partie de châssis, située du côté de la carrosserie, à y relier, ainsi que des longerons latéraux ( 1, 2) des parties de châssis qui, en tant que longerons profilés, présentent chacun une âme verticale et des ailes supérieure et inférieure et dont ceux qui correspondent à un côté du châssis sont reliés en étant placés l'un contre l'autre, par leurs âmes, les longerons (2) des parties du châssis situées du côté de la carrosserie ayant, en cas de section en U, leurs ailes orientées l'une vers l'autre,
caractérisé
par le fait que les longerons (1) des parties du châssis situées du côté de l'avant moteur présentent une section en Z avec des ailes (5b) supérieures orientées en sens inverse l'une de l'autre et des ailes inférieures (5a) orientées l'une vers l'autre, et que les ailes inférieures (5a) des longerons (1) situés du côté de l'avant moteur, dans la zone de recouvrement (3) avec les longerons (2) situés du côté du châssis, viennent en prise avec ceux-ci par-dessous.

2. Châssis selon la revendication 1,
caractérisé
par le fait que les extrémités libre des longerons (1) situés du côté de l'avant moteur sont conçus pour un rivetage des longerons (2) situés du côté de la carrosserie.

3. Châssis selon la revendication 1 ou 2,
caractérisé
par le fait que la distance mutuelle des longerons (1) situés du côté de l'avant moteur croît en direction de l'extrémité avant de l'avant moteur.

4. Châssis selon l'une des revendications précédentes,
caractérisé
par le fait que sur les ailes (5) des longerons (1) situés du côté de l'avant moteur sont formées des projections (6) pour recevoir des pièces à monter.

5. Châssis selon la revendication 4,
caractérisé
par le fait que les projection (6) possèdent des portions de surface pliées l'une par rapport à l'autre.

6. Châssis selon l'une des revendications précédentes,
caractérisé
par le fait que les âmes (4) des longerons (1) situes du côté de l'avant moteur possèdent, à leurs extrémités avant, des portions d'extrémité repliées vers l'intérieur ou vers l'extérieur à environ 90°.
